(19) Europäisches Patentamt

European Patent Office

Office européen des brevets

(11) **EP 0 932 819 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: **97943885.0**

(22) Anmeldetag: **23.09.1997**

(51) Int Cl.$^7$: **G01D 5/38**

(86) Internationale Anmeldenummer:
**PCT/EP97/05211**

(87) Internationale Veröffentlichungsnummer:
**WO 98/16802 (23.04.1998 Gazette 1998/16)**

(54) **OPTISCHE POSITIONSMESSEINRICHTUNG**

OPTICAL POSITION INDICATOR

INDICATEUR OPTIQUE DE POSITION

(84) Benannte Vertragsstaaten:
**AT CH DE FR GB IT LI**

(30) Priorität: **16.10.1996 DE 19642680**

(43) Veröffentlichungstag der Anmeldung:
**04.08.1999 Patentblatt 1999/31**

(73) Patentinhaber: **Dr. Johannes Heidenhain GmbH
83292 Traunreut (DE)**

(72) Erfinder: **HUBER, Walter
D-83278 Traunstein (DE)**

(56) Entgegenhaltungen:
**EP-A- 0 163 362        EP-A- 0 223 009
EP-A- 0 651 232        EP-A- 0 672 891**

**Beschreibung**

Die vorliegende Erfindung betrifft eine optische Positionsmeßeinrichtung nach dem Oberbegriff des Anspruches 1.

Eine gattungsgemäße optische Positionsmeßeinrichtung ist aus der EP 0 223 009 B1 der Anmelderin bekannt und soll anhand der schematisierten Darstellung der Figuren 1a-1c nachfolgend erläutert werden. Innerhalb dieser Positionsmeßeinrichtung wird eine Maßstabteilung M von einer Abtasteinheit A, welche parallel und in x-Richtung verschiebbar zum erstgenannten Gitter M angeordnet ist, abgetastet. Hierbei werden mit Hilfe der Abtasteinheit A verschiebungsabhängig modulierte Signale erfaßt und über eine nicht dargestellte Auswerleeinheit weiterverarbeitet.

Die Abtasteinheit A umfaßt neben einer Abtastplatte AP eine Kondensoroptik K sowie eine Trägerplatine T; die einzelnen Komponenten der Abtasteinheit A und deren Funktion seien im folgenden noch näher beschrieben. So weist die Abtastplatte AP wenigstens zwei, in Meßrichtung x um einen Bruchteil der Teilungsperiode TP zueinander verschobene Abtastfelder AF1, AF2 auf, d.h. die Abtastfelder AF1 und AF2 sind um den Abstand D zueinander in Meßrichtung x versetzt angeordnet; sowohl die Abtastfelder AF1, AF2 als auch die Meßteilung M sind lediglich schematisiert angedeutet. Die Abtastfelder AF1, AF2 auf der Abtastplatte AP sind vorzugsweise als Phasengitter ausgebildet, wobei mittels eines von 1:1 abweichenden Verhältnisses von Stegbreite zu Furchenbreite über jedes der beiden Abtastfelder AF1, AF2 phasenverschobene Teilstrahlenbündel verschiedener Beugungsordnungen erzeugt werden können. Pro Abtastfeld AF1, AF2 werden von den resultierenden Beugungsordnungen zwei benutzt, vorzugsweise die +1. und die -1. Beugungsordnung. Es resultieren demnach insgesamt vier weiterverarbeitbare Teilsignale. Die Gitterparameter sind hierbei derart gewählt, daß zwischen den Teilsignalen der +1. und -1. Beugungsordnung ein Phasenversatz von 90° resultiert. Auf die Darstellung des Strahlengangs wurde aus Gründen der Übersichtlichkeit verzichtet.

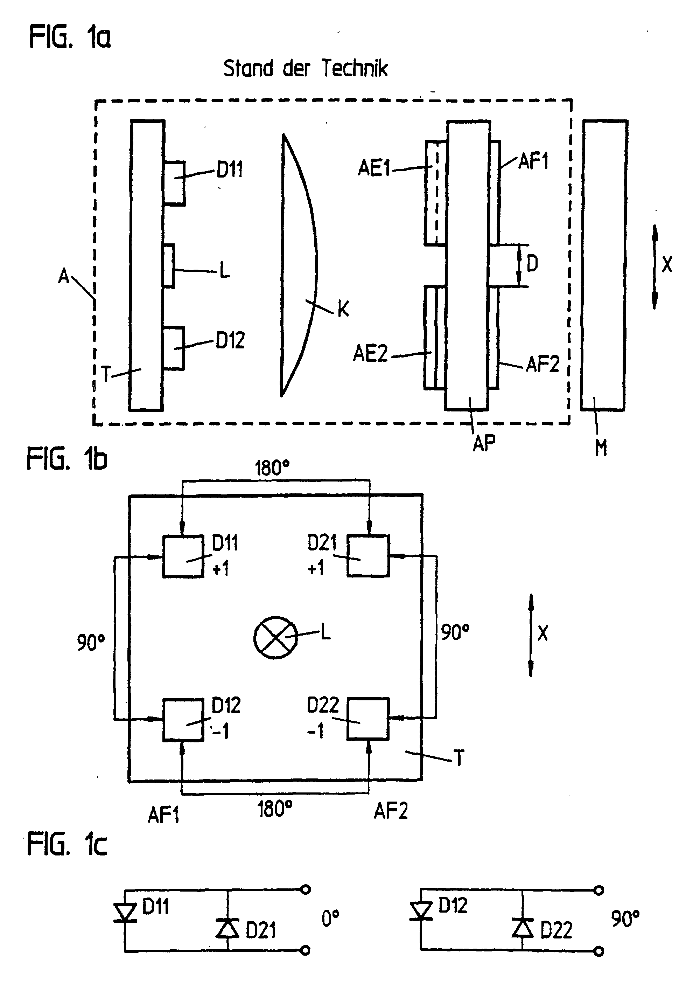

Über nachgeordnete Detektorelemente D11, D12, D21 und D22, angeordnet auf der Trägerplatine T der Abtasteinheit A, werden die verschiedenen Teilstrahlenbündel erfaßt; Figur 1b zeigt hierbei die Relativanordnung der verschiedenen Detektorelemente D11, D12, D21, D22 in der Detektorebene sowie die auf der Trägerplatine T angeordnete Lichtquelle L.

Zwischen der Trägerplatine T und der Abtastplatte AP ist desweiteren eine Kondensoroptik K angeordnet, die zur Kollimation der von der Lichtquelle L emittierten Strahlenbündel sowie zur Abbildung der in Richtung der Detektorelemente D11, D12, D21, D22 reflektierten Teilstrahlenbündel dient. Die Trägerplatine T mit den Detektorelementen D11, D12, D21, D22 und der Lichtquelle L ist demzufolge in der Brennebene der Kondensoroptik K innerhalb der Abtasteinheit A angeordnet.

Zur Detektion der vier Teilsignale ist es erforderlich, diese räumlich zu trennen. Hierbei wird durch die Aufspaltung der Teilstrahlenbündel jedes Abtastfelds AF1, AF2 in verschiedene Beugungsordnungen bereits die räumliche Trennung von um 90° phasenversetzten Teilsignalen ermöglicht, d.h. zur Detektion liegen die genutzten +1. und -1. Beugungsordnungen jedes Abtastfeldes AF1, AF2 räumlich getrennt vor. Es handelt sich dabei um zwei um 90° phasenversetzte Teilsignale aus dem Abtastfeld AF1, die von den Detektorelementen D11 und D12 erfaßt werden; die über das Abtastfeld AF2 erzeugten, ebenfalls um 90° phasenversetzten Teilsignale werden von zwei weiteren Detektorelementen D21, D22 erfaßt. Die Aufspallung in verschiedene Beugungsordnungen erfolgt dabei in der Zeichenebene von Figur 1a. Die Teilsignalpaare aus den beiden Abtastfeldern AF1 und AF2 müssen noch räumlich getrennt werden, um eine Detektion mit Hilfe verschiedener Detektorelemente zu ermöglichen. Hierzu wird in der EP 0 223 009 vorgeschlagen, den verschoben angeordneten Abtastfeldern AF1 und AF2 selektiv wirkende optische Mittel AE1 und AE2 zuzuordnen. Dadurch wird eine räumliche Aufspaltung der beiden aus den Ablastfeldern AF1 und AF2 stammenden Teilsignalpaare senkrecht zur Zeichenebene bewirkt.

Die räumlichen Verhältnisse werden insbesondere bei der Darstellung gemäß der Figur 1b deutlich, in der darüberhinaus auch die Phasenbeziehungen zwischen den einzelnen Teilsignalen miteingezeichnet sind. Die beiden linken Detektorelemente D11 und D12 dienen zur Detektion der aus dem Abtastfeld AF1 resultierenden Teilstrahlenbündel +1. und -1 Beugungsordnung, über die beiden rechten Detektorelemente D21 und D22 werden die in die +1. und -1. Ordnung gebeugten Teilstrahlenbündel des Abtastfeldes AF2 erfaßt.

Der Phasenversatz von 180° zwischen den aus den Abtastfeldern AF1 und AF2 resultierenden Teilstrahlenbündeln wird durch den erwähnten gegenseitigen Versatz D dieser Abtastfelder AF1 und AF2 in Meßrichtung x bewirkt. Der entsprechende Versatz D beträgt dabei $D=TP/2*(N + 1/2)$, wobei TP die Teilungsperiode der Maßstabteilung darstellt und N=0, 1, 2,.... gilt.

Um aus den letztlich vier verschiedenen Teilsignalen die beiden gewünschten, um 90° phasenversetzten Ausgangssignale 0°, 90° zur Weiterverarbeitung zu erzeugen, wird in der EP 0 223 009 nunmehr vorgeschlagen, die Detektorelemente D11, D12, D21, D22 in der in Fig. 1c gezeigten Art und Weise zu verschalten. Dies bedeutet, daß zur Bildung des 0°-Signales die beiden Detektorelemente D11 und D21 mit um 180° phasenverschobenen Teilsignalen antiparallel miteinander verschaltet werden, während zur Bildung des 90°-Signales die beiden Detektorelemente D12 und D22 mit anliegenden gegenphasigen Teilsignalen ebenfalls antiparallel miteinander verschaltet werden. Es werden demzufolge jeweils diejenigen Detektorelemente D11, D12, D21, D22 antiparallel miteinander verschaltet, an denen gegenphasige Teilsignale anliegen, wobei die gegenphasigen Teilsignale immer aus unterschiedlichen Abtastfeldern AF1, AF2 stammen.

Zusammenfassend ist festzuhalten, daß durch die Wahl der Gitterparameter der Abtastfelder AF1, AF2 der 90°-Phasenversatz zwischen den Teilsignalen +1, und -1.Beugungsordnung eingestellt wird, während das jeweilige Gegentakt-Teilsignal mit 180°-Phasenversatz hierzu aus dem jeweils anderen Abtastfeld stammt, welches um den Abstand D dagegen verschoben in Meßrichtung x angeordnet ist.

Die in der EP 0 223 009 vorgeschlagene Positionsmeßeinrichtung weist nunmehr jedoch auch bestimmte Nachteile auf. So erfolgt die Gegentakt-Signalbildung, indem Teilsignale aus unterschiedlichen Abtastfeldern AF1, AF2 antiparallel verschaltet werden. Dadurch resultieren bei lokaler Verschmutzung der Abtastfelder AF1, AF2 sogenannte Tastverhältnis-Fehler, da die Amplituden der gegenphasigen Teilsignale, welche antiparallel verschaltet werden, aus den verschiedenen Abtastfeldern AF1, AF2 nicht identisch sind. Derartige Probleme ergeben sich im übrigen nicht nur bei den in der EP 0 223 009 beschriebenen interferentiellen Meßsystemen.

Aufgrund der Auslegung des Phasenversalzes der Interferenzsignale +1. und -1. Beugungsordnung aus den beiden Abtastfeldern AF1, AF2 auf 90° wird gegenüber einer Dimensionierung des Phasenversatzes auf 120° der Modulationsgrad dieser Signale stark beeinträchtigt. Eine optimale Modulation der Interferenzsignale ist in einem interferentiellen Dreigittergeber bei einer Auslegung der Gitterparameter der Ablastfelder auf einen Phasenversatz von 120° zwischen den genutzten Beugungsordnungen zu erwarten. Dies ist beispielsweise in einer Positionsmeßeinrichtung realisiert, die in der EP 0163 362 beschrieben ist.

Somit ergeben sich bei der Gitterherstellung bei einer Phasenauslegung auf 90° zwischen den Interferenzsignalen +1. und -1. Beugungsordnung deutlich höhere Anforderungen. Ließe man bei einer Phasenauslegung auf 90° zwischen den Teilsignalen +1. und -1. Beugungsordnung bei der Gitterherstellung die gleichen Fertigungstoleranzen zu wie im Fall von 120° Phasenversatz, so wären wesentlich größere Schwankungen von Modulationsgrad und Phasenwinkel der Teilsignale zu erwarten.

Aufgabe der vorliegenden Erfindung ist es daher, eine hochauflösende optische Positionsmeßeinrichtung zu schaffen, insbesondere eine interferentielle Dreigitter·Positionsmeßeinrichtung, die um 90° phasenversetzte Ausgangssignale zur Weiterverarbeitung liefert und bei der lokale Verschmutzungen von Abtastfeldern und/oder der Maßstabteilung einen möglichst geringen Einfluß auf die resultierende Meßgenauigkeit haben. Ferner sollten die Toleranzanforderungen bei der Herstellung der Teilungsstrukturen der Abtastfelder möglichst gering sein.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen in den abhängigen Ansprüchen.

Die erfindungsgemäßen Maßnahmen gewährleisten nunmehr eine Abtastung, bei der die zur Bildung der um 90° phasenverschobenen Ausgangsignale herangezogenen Teilsignale jeweils aus dem gleichen Abtastfeld stammen, während bei der Lösung gemäß dem diskutierten Stand der Technik hierzu Teilsignale aus unterschiedlichen Abtastfeldern verwendet werden. Dies hat zur Folge, daß beispielsweise bei lokaler Verschmutzung eines Abtastfeldes in der erfindungsgemäßen Positionsmeßeinrichtung lediglich sogenannte Amplitudenfehler entstehen. Mit Amplitudenfehler sei dabei ein Fehler bezeichnet, der aus der unterschiedlichen Amplitude der beiden um 90° phasenversetzten Ausgangssignale resultiert.

Insgesamt ergibt sich innerhalb der erfindungsgemäßen optischen Positionsmeßeinrichtung dadurch ein geringerer Unterteilungsfehler bei der nachfolgenden Interpolation im Vergleich zur bekannten Lösung gemäß dem erwähnten Stand der Technik.

Darüberhinaus kann bei gleichen Toleranzanforderungen an die Gitterherstellung in der erfindungsgemäßen Positionsmeßeinrichtung davon ausgegangen werden, daß sowohl die gewünschten Phasenwinkel zwischen den verschiedenen Teilsignalen als auch deren Amplituden wesentlich näher an den gewünschten Sollwerten liegen. Diese bessere Einhaltung gewünschter Anforderungen ist darauf zurückzuführen, daß das Modulationsmaximum bei interferentiellen Dreigittergebern in den Teilsignalen +1. und -1. Beugungsordnung gerade bei der Phasenauslegung auf 120° erreicht wird, wie sie in der erfindungsgemäßen Positionsmeßeinrichtung vorgesehen ist.

Ferner ist auf einfache Art und Weise die Kompatibilität eines interferentiellen Meßsystems, z.B. ausgeführt als Dreigittergeber gemäß der EP 0163 362, mit herkömmlichen Auswerteeinheiten gewährleistet, welche eingangsseilig zwei um 90° phasenversetzte Signale voraussetzen.

Weitere Vorteile sowie Einzelheiten der erfindungsgemäßen Positionsmeßeinrichtung ergeben sich aus der nachfolgenden Beschreibung eines Ausführungsbeispiels anhand der beiliegenden Figuren.

Dabei zeigt

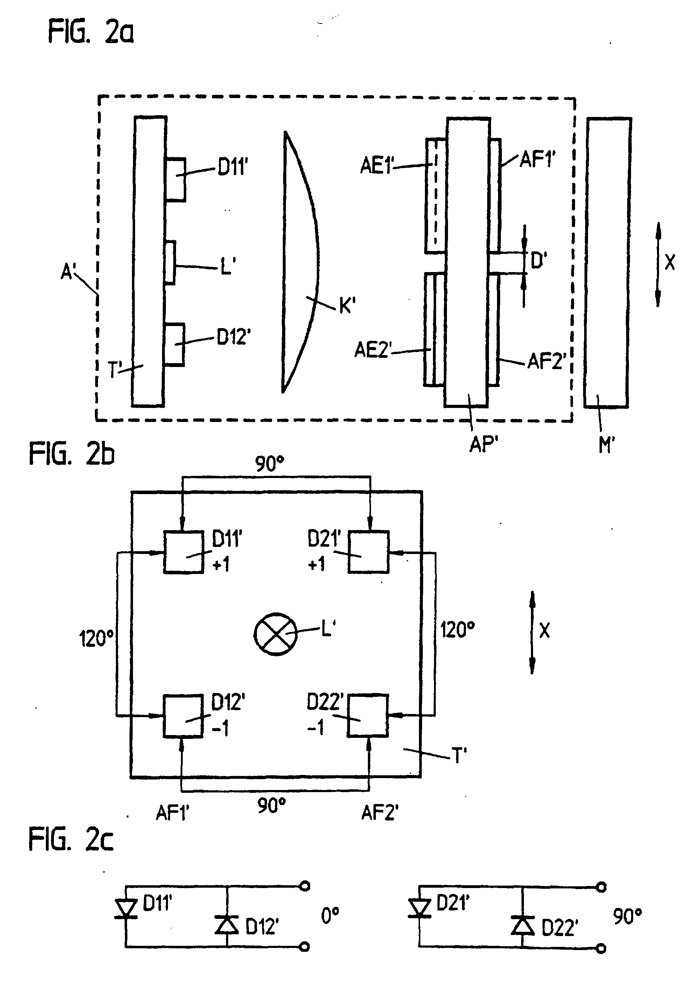

Figur 2a-2c     jeweils eine schematisierte Teilansicht der erfindungsgemäßen optischen Positionsmeßeinrichtung.

Anhand der Figuren 2a-2c sei nachfolgend die erfindungsgemäße optische Positionsmeßeinrichtung erläutert. Hierbei handelt es sich um schematisierte Teilansichten, in denen analog zur Erläuterung des Standes der Technik anhand der Figuren 1a-1c auf die Darstellung der einzelnen Strahlengänge bzw. Teilstrahlengänge verzichtet wurde. Figur 2a zeigt hierbei eine Seitenansicht der erfindungsgemäßen optischen Positionsmeßeinrichtung, Figur 2b die Verteilung der Detektorelemente in der Detektorebene bzw. in der Brennebene des Kondensors inklusive der Phasenbeziehungen der einzelnen Teilsignale, die unterschiedliche Detektorelemente beaufschlagen; Figur 2c zeigt schließlich die Verschaltung der Detektorelemente zur Erzeugung der um 90° phasenversetzten Ausgangssignale.

Die erfindungsgemäße optische Positionsmeßeinrichtung zur Erfassung der Relativposition zweier zueinander beweglicher Objekte umfaßt eine Maßstabteilung M' sowie eine Abtasteinheit A'. Die von einer Lichtquelle L' emittierten Strahlenbündel werden von einer Kondensoroptik K' kollimiert und passieren zunächst die Abtastplatte AP' ein erstes Mal und werden hierbei gebeugt. Die gebeugten Teilstrahlenbündel treffen auf die Maßstabteilung M', werden unter erneuter Beugung reflektiert und passieren ein zweites Mal die Abtastplatte AP'. Die in gleiche Raumrichtungen abgelenkten und beim zweiten Passieren der Abtastplatte AP' am gleichen Ort ankommenden Teilstrahlenbündel interferieren in der Ebene der Gitterteilung der Abtastplatte AP' und werden mittels nachgeordneter Detektorelemente D11', D12', D21', D22' erfaßt und weiterverarbeitet. Wie bereits oben angedeutet ist die Trägerplatine T' mit der Lichtquelle L' und den Detektorelementen D11', D12', D21', D22' in der Brennebene der Kondensoroptik K' angeordnet.

Die Maßstabteilung M' und die Abtasteinheit A' sind in Meßrichtung, die in der Darstellung als x-Richtung bezeichnet ist, relativ zueinander verschiebbar angeordnet und mit den zueinander beweglichen Objekten verbunden. Im Fall der Relativverschiebung ergeben sich verschiebungsabhängig modulierte Interferenzsignale, die über die Detektorelemente D11', D12', D21', D22' erfaßt werden. Bei den beweglich angeordneten Objekten kann es sich beispielsweise um das Werkstück und das Werkzeug einer konventionellen Werkzeugmaschine handeln. Daneben sind jedoch auch vielfältige andere Einsatzmöglichkeiten für die optische Positionsmeßeinrichtung gemäß der vorliegenden Erfindung denkbar.

Die dargestellte Ausführungsform der Figur 2a zeigt ein Auflicht-Meßsystem, das heißt die Maßstabteilung M' weist eine reflektierende Teilungsstruktur auf, die jedoch im Detail nicht näher dargestellt wird. Daneben ist es prinzipiell auch möglich, die erfindungsgemäße Positionsmeßeinrichtung als Durchlicht-Meßsystem mit einer transparenten Teilungsstruktur auszubilden. Ebenso ist es selbstverständlich möglich, alternativ zur dargestellten Längenmeßeinrichtung eine Winkelmeßeinrichtung erfindungsgemäß zu realisieren.

Auf der Abtastplatte AP' sind zwei in Meßrichtung x räumlich getrennt angeordnete Abtastfelder AF1' und AF2' angeordnet. Die beiden Abtastfelder AF1' und AF2' sind in an sich bekannter Art und Weise in Form von Durchlichtphasengittern mit einer definierten Teilungsperiode TP' ausgebildet. Auf der Abtastplatte AP' sind die Abtastfelder AF1', AF2' in Meßrichtung x zueinander um einen definierten Betrag D' versetzt angeordnet. Erfindungsgemäß ist hierbei nunmehr vorgesehen, die beiden Abtastfelder AF1' und AF2' um einen Abstand D' versetzt zueinander anzuordnen, wobei für D' gilt:

$$D'=TP'/2*(N+1/4),$$

mit TP' als der Teilungsperiode des Abtastgitters und N=0, 1, 2, 3, ....

Darüber hinaus sind den beiden Abtastfeldern AF1' und AF2' auf der Abtastplatte AP' optische Ablenkelemente AE1' und AE2' eindeutig zugeordnet, die wie bereits vorab beschrieben zur Richtungstrennung bzw. räumlichen Separation der von den Abtastfeldern AF1' und AF2' gelieferten Teilstrahlenbündel bzw. Teilsignale dienen. Die erforderlichen optischen Ablenkelemente AE1' und AE2' sind im dargestellten Ausführungsbeispiel als keilförmige Prismen ausgeführt, wobei die beiden Prismen in unterschiedlicher Orientierung auf derjenigen Seite der Abtastplatte AP' angeordnet sind, die der Trägerplatine T'mit den Detektorelementen D11', D12', D21', D22' und der Lichtquelle L' zugewandt ist. Die Abtastfelder AF1' und AF2' könnten alternativ zum dargestellten Ausführungsbeispiel selbstverständlich auch auf der anderen Seite der Abtastplatte AP'angeordnet sein, d.h. direkt unter den Ablenkelementen AE1' und AE2'. Ferner ist es möglich, die optischen Ablenkelemente etwa auch als beugende Gitterstrukturen mit jeweils definiert einstellbarer Ablenkwirkung auszubilden.

Ferner sind zur weiteren räumlichen Separation der vier auszuwertenden Teilsignale die Abtastgitter der beiden Abtastfelder AF1' und AF2' derart dimensioniert, daß die jeweils darauf auftreffenden Strahlenbündel unter anderem in die +1. und -1. Beugungsordnung abgelenkt werden; die in diese Raumrichtungen abgelenkten Strahlenbündel werden dabei zur weiteren Auswertung herangezogen. Hierbei weisen die in diese beiden Beugungsordnungen abgelenkten Teilstrahlenbündel einen Phasenversatz von 120° zueinander auf. Um dies sicherzustellen werden die Gitterparameter der Abtastgitter geeignet gewählt.

Detektorseitig ist auf einer Trägerplatine T' vorgesehen, vier separate Detektorelemente D11', D12', D21' und D22' und eine Lichtquelle L' anzuordnen. Die explizite Anordnung der einzelnen Detektorelemente D11', D12', D21', D22' ist in Figur 2b dargestellt. In der Mitte der Trägerplatine T' ist in der Darstellung der Figur 2b auch die vorgesehene Lichtquelle L' erkennbar. Alternativ zur dargestellten Ausführungsform kann die Trägerplatine anstelle der Lichtquelle auch eine geeignete Ausnehmung aufweisen, durch die die Strahlenbündel der separat angeordneten Lichtquelle auf die Kondensoroptik, die Abtastplatte und die Maßstabteilung fallen.

Wird die Gitterstruktur der beiden Abtastfelder AF1' und AF2' wie beim bekannten Dreigittergeber gemäß der EP 0 163 362 derart dimensioniert, daß wie vorher erwähnt die +1. und -1. Beugungsordnungen einen Phasenversatz von 120° zueinander aufweisen, so resultieren bei der in den Figuren 2a-2c dargestellten Ausführungsform der erfindungsgemäßen optischen Positionsmeßeinrichtung die in Figur 2b angegebenen Phasenbeziehungen zwischen den einzelnen Teilsignalen. In Figur 2b sind die Phasenbeziehungen zwischen verschiedenen Detektorelementen D11', D12', D21', D22' eingezeichnet, die den verschiedenen Teilsignalen zugeordnet werden.

Die beiden linken Detektorelemente D11' und D12' registrieren hierbei die aus dem Abtastfeld AF1' stammenden Teilsignale, welche wie vorab erläutert einen Phasenversatz von 120° zueinander aufweisen. Während der Detektor D11' die +1. Beugungsordnung erfaßt, detektiert das Detektorelement D12' die -1. Beugungsordnung. Analog hierzu wird über das Detektorelement D21' die +1. Beugungsordnung aus dem Abtastfeld AF2' erfaßt, während das Detektorelement D22' die -1. Beugungsordnung aus diesem Abtastfeld registriert, d.h. die beiden rechten Detektorelemente D21' und D22' erfassen die Teilsignale aus dem Abtastfeld AF2'. Auch hierbei beträgt der Phasenversatz zwischen den +1. und -1. Beugungsordnungen aufgrund der entsprechend gewählten Gitterparameter 120°.

Wegen der oben erläuterten Dimensionierung des Versatzes D' der beiden Abtastfelder AF1' und AF2' auf der Abtastplalte AP' ergibt sich ein Phasenversatz zwischen den korrespondierenden Teilsignalen beider Abtastfelder AF1 'und AF2' von 90°, was ebenfalls in Figur 2b eingezeichnet ist.

Innerhalb der erfindungsgemäßen optischen Positionsmeßeinrichtung erfolgt die Verschaltung der einzelnen Detektorelemente nunmehr in der gemäß Figur 2c dargestellten Art und Weise, um letztlich die gewünschten, um 90° phasenversetzten Ausgangssignale zu erhalten. So werden zur Bildung des nachfolgend als 0°-Signal bezeichneten Ausgangssignales die Detektorelemente D11' und D12' antiparallel miteinander verschaltet. Analog hierzu ergibt sich aus der antiparallelen Verschaltung der Detektorelemente D21' und D22' das erforderliche 90°-Signal als zweites gewünschtes Ausgangssignal.

Deutlich erkennbar ist nunmehr, daß die zur Erzeugung der beiden gewünschten Ausgangssignale 0°, 90° jeweils herangezogenen Teilsignale aus einem gemeinsamen Abtastfeld AF1' oder AF2' stammen. Zur Bildung des jeweiligen nullsymmetrischen Ausgangssignales 0°, 90° werden in der gezeigten Art und Weise jeweils die einem Abtastfeld AF1', AF2' zugeordneten Detektorelemente D11', D12', D21', D22' antiparallel verschaltet.

Es resultiert ein stabiles Tastverhältnis, das heißt eine konstante Beziehung zwischen den Amplituden der zur Bildung der 0°- und 90°-Signale verwendeten Teilsignale. Ist beispielsweise eines der beiden Abtastfelder AF1', AF2' lokal verschmutzt, so wirkt sich dies lediglich auf die beiden Teilsignale aus diesem einen Abtastfeld aus. Die Auswirkung betrifft jedoch die beiden Teilsignale in gleicher Weise, die zur Erzeugung des diesem Abtastfeld zugeordneten Ausgangssignales herangezogen werden. Als Fehler ergeben sich lediglich Amplitudenfehler zwischen den beiden um 90° phasenversetzten Ausgangssignalen, das heißt die Amplitude des aus dem verschmutzen Abtastfeld erzeugten Ausgangssignales ist geringer als die Amplitude des Ausgangssignales aus dem anderen Abtastfeld, in dem keine Verschmutzung vorliegt.

Zur weiteren Minimierung derartiger Amplitudenfehler könnten darüber hinaus auch mehr als die lediglich zwei dargestellten Abtastfelder auf einer Abtastplatte benutzt werden. Beispielsweise ist es hierbei möglich, die im Ausführungsbeispiel gezeigte Anordnung der Abtastfelder AF1', AF2' in Meßrichtung x mehrfach aufeinanderfolgend vorzusehen. Es resultiert dabei eine phasenrichtige Überlagerung der Teilsignale aus den jeweiligen Abtastfeldern AF1' bzw. aus den Abtastfeldern AF2'.

Die letztlich vorliegenden, um 90° phasenversetzten Ausgangssignale der erfindungsgemäßen optischen Positionsmeßeinrichtung können von nachgeordneten, konventionellen Auswerteeinheiten oder Folgeelektroniken in bekannter Art und Weise zur exakten Positionsbestimmung inclusive Richtungsdiskriminierung herangezogen werden.

**Patentansprüche**

1. Optische Positionsmeßeinrichtung zur Erfassung der Relativposition zweier zueinander beweglicher Objekte, mit

   - einer Maßstabteilung (M') und einer Abtasteinheit (A'), die jeweils mit den Objekten verbunden sind, wobei die Abtasteinheit (A') eine Abtastplatte (AP') mit mindestens zwei Abtastfeldern (AF1', AF2') in Form von Abtastteilungen aufweist, die in Meßrichtung (x) um einen bestimmten Bruchteil (D') der Teilungsperiode (TP') der Maßstabteilung (M') zueinander versetzt angeordnet sind, so daß den verschiedenen Abtastfeldern (AF1', AF2') definiert phasenverschobene Teilsignale zuzuordnen sind, die verschiebungsabhängig moduliert sind,
   - den Abtastfeldern (AF1', AF2') zugeordneten optischen Ablenkelementen (AE1', AE2'), die die vorgenannten Teilsignale der verschiedenen Abtastfelder (AF1', AF2') zur Detektion räumlich trennen,
   - mindestens zwei, der Abtastplatte (AP') nachgeordnete Paare von Detektorelementen (D11', D12', D21', D22'), mit denen die phasenverschobenen Teilsignale in unterschiedlichen Raumrichtungen erfaßbar sind und wobei die Detektorelemente (D11', D12'. D21', D22' ) derart miteinander verschaltet sind, daß ausgangsseitig zwei um 90° phasenversetzte Ausgangssignale zur Weiterverarbeitung vorliegen,

**dadurch gekennzeichnet, daß**

- die mindestens zwei Abtastfelder (AF1', AF2') um D'=TP'/2∗(N+1/4) zueinander versetzt auf der Abtastplatte (AP') angeordnet sind, wobei mit TP' die Teilungsperiode der Maßstabteilung (M') bezeichnet sei und N=0, 1, 2,..... gilt, so daß zu jedem Teilsignal eines Abtastfeldes (AF1', AF2') mindestens ein um 90° phasenversetztes Teilsignal des anderen Abtastfeldes (AF1', AF2') vorliegt und die Detektorelemente (D11', D12', D21', D22') eines Abtastfeldes (AF1', AF2') jeweils antiparallel miteinander verschaltet sind, so daß jedem Abtastfeld (AF1', AF2') ein resultierendes Ausgangssignal (0°, 90°) zuzuordnen ist und die resultierenden Ausgangssignale (0°, 90°) der beiden Abtastfelder (AF1', AF2') einen Phasenversatz von 90° zueinander aufweisen.

2. Optische Positionsmeßeinrichtung nach Anspruch 1, **dadurch gekennzeichnet, daß** jedem Abtastfeld (AF1', AF2') zwei in einer gemeinsamen Ebene angeordnete Detektorelemente (D11', D12', D21', D22') zugeordnet sind, die von Teilsignalen mit einem definierten Phasenversatz beaufschlagt werden.

3. Optische Positionsmeßeinrichtung nach Anspruch 2, **dadurch gekennzeichnet, daß** die Detektorelemente (D11', D12', D21', D22') zusammen mit einer Lichtquelle (L') auf einer Trägerplatine (T') angeordnet sind.

4. Optische Positionsmeßeinrichtung nach Anspruch 2, **dadurch gekennzeichnet, daß** die Abtastteilungen der Abtastfelder (AF1', AF2') hinsichtlich der Modulation der +1. und -1. Beugungsordnung optimiert sind, so daß zwischen den Teilsignalen dieser Beugungsordnungen ein Phasenversatz von 120° vorliegt..

5. Optische Positionsmeßeinrichtung nach Anspruch 1, **dadurch gekennzeichnet, daß** die optischen Ablenkelemente (AE1', AE2') als Prismen ausgebildet sind.

6. Optische Positionsmeßeinrichtung nach Anspruch 1, **dadurch gekennzeichnet, daß** die optischen Ablenkelemente (AE1', AE2') als beugende Gitterstrukturen ausgebildet sind.

7. Optische Positionsmeßeinrichtung nach mindestens einem der vorangehenden Ansprüche, **dadurch gekennzeichnet, daß** die Positionsmeßeinrichtung als Linear-Meßeinrichtung ausgebildet ist.

8. Optische Positionsmeßeinrichtung nach mindestens einem der vorangehenden Ansprüche, **dadurch gekennzeichnet, daß** die Positionsmeßeinrichtung als Winkel-Meßeinrichtung ausgebildet ist.

**Claims**

1. Optical position measuring device for detecting the relative position of two objects which are movable in respect of each other, having

- a scale graduation (M') and a scanning unit (A'), which are respectively connected with the objects, wherein the scanning unit (A') has a scanning plate (AP') with at least two scanning fields (AF1', AF2') in the form of scanning graduations, which are arranged offset from each other in the measuring direction (x) by a defined fraction (D') of the graduation period (TP') of the scale graduation (M'), so that partial signals, phase-shifted in a defined manner and which are modulated as a function of the displacement, can be associated with the different scanning fields (AF1', AF2'),
- deflection elements (AE1', AE2'), which are assigned to the scanning fields (AF1', AF2'), and which spatially separate the above-mentioned partial signals from the different scanning fields (AF1', AF2') for the detection,
- at least two pairs of detector elements (D11', D12', D21', D22'), placed downstream of the scanning plate (AP1'), by means of which the phase-shifted partial signals can be detected in different spatial directions, the detector elements (D11', D12', D21', D22') being wired together in such a way that two output signals, which are phase-shifted by 90°, are present at the output side for further processing,

**characterised in that**

- the at least two scanning fields (AF1', AF2') are arranged on the scanning plate (AP') offset by D' = TP'/2*(N+1/4) in respect of each other, wherein TP' identifies the graduation period of the scale graduation (M'), and wherein N=0, 1, 2, ... applies, so that for each partial signal from a scanning field (AF1', AF2') there is at least one partial signal, phase-shifted by 90°, from the other scanning field (AF1', AF2') and the detector elements (D11', D12', D21', D22') of one scanning field (AF1', AF2') are respectively wired anti-parallel to each other, so that a resulting output signal (0°, 90°) can be associated with each scanning field (AF1', AF2'), and the resulting output signals (0°, 90°) of the two scanning fields (AF1', AF2') have a phase-shift of 90° with respect to each other.

2. Optical measuring device according to claim 1, **characterised in that** two detector elements (D11', D12', D21', D22'), arranged in a common plane, are associated with each scanning field (AF1', AF2') and are acted upon by partial signals with a defined phase shift.

3. Optical position measuring device according to claim 2, **characterised in that** the detector elements (D11', D12', D21', D22') are arranged on a support plate (T') together with a light source (L').

4. Optical position measuring device according to claim 2, **characterised in that** the scanning graduations of the scanning fields (AF1', AF2') are optimised with respect to the modulation of the +1st and -1st order of diffraction, so that a phase shift of 120° exists between the partial signals of these orders of diffraction.

5. Optical position measuring device according to claim 1, **characterised in that** the optical deflection elements (AE1, AE2') are designed as prisms.

6. Optical position measuring device according to claim 1, **characterised in that** the optical deflection elements (AE1', AE2') are designed as diffractive grating structures.

7. Optical position measuring device according to at least one of the preceding claims, **characterised in that** the position measuring device is designed as a linear measuring device.

8. Optical position measuring device according to at least one of the preceding claims, **characterised in that** the position measuring device is designed as an angle measuring device.

## Revendications

1. Dispositif optique de mesure de position pour déterminer la position relative de deux objets mobile l'un par rapport à l'autre, comprenant

- une graduation de règle de mesure (M') et une unité d'exploration (A') reliées respectivement aux objets, l'unité d'exploration (A') présentant une plaque d'exploration (AP') avec au moins deux champs d'exploration (AF1', AF2') sous la forme de graduations d'exploration, qui sont décalés réciproquement dans la direction de mesure (x) d'une fraction (D') déterminée de la période de division (TP') de la graduation de règle de mesure (M') de manière que des signaux partiels déphasés de façon définie qui sont modulés en fonction du déplacement soient associés aux différents champs d'exploration (AF1', AF2'),

- des éléments de déviation optiques (AE1', AE2') associés aux champs d'exploration (AF1', AF2') et séparant dans l'espace en vue de la détection lesdits signaux partiels des différents champs d'exploration (AF1', AF2'),

- au moins deux paires d'éléments détecteurs (D11', D12', D21', D22') montés à la suite de la plaque d'exploration (AP') et détectant dans des directions spatiales différentes les signaux partiels déphasés, les éléments détecteurs (D11', D12', D21', D22') étant interconnectés de manière que deux signaux de sortie déphasés de 90° soient disponibles côté sortie en vue du traitement ultérieur,

**caractérisé par le fait que**

- les champs d'exploration (AF1', AF2') au nombre de deux au moins sont disposés sur la plaque d'exploration (AP') avec un décalage réciproque de D'=TP'/2*(N+1/4), où TP' désigne la période de division de la graduation de règle de mesure (M') et N=0, 1, 2...., de sorte qu'à chaque signal partiel d'un champ d'exploration (AF1', AF2') correspond au moins un signal partiel déphasé de 90° de l'autre champ d'exploration (AF1', AF2') et que les éléments détecteurs (D11', D12', D21', D22') d'un champ d'exploration (AF1', AF2') sont respectivement interconnectés tête-bêche(anti-parallèle) de sorte qu'un signal de sortie résultant (0°, 90°) est associé à chaque champ d'exploration (AF1', AF2') et que les signaux de sortie résultants (0°, 90°) des deux champs d'exploration (AF1', AF2') présentent un déphasage réciproque de 90°.

2. Dispositif optique de mesure de position suivant la revendication 1, **caractérisé par le fait qu'**à chaque champ d'exploration (AF1', AF2') sont associés deux éléments détecteurs (D11', D12', D21', D22') qui sont disposés sdans un plan commun et qui détectent des signaux partiels avec un déphasage défini.

**3.** Dispositif optique de mesure de position suivant la revendication 2, **caractérisé par le fait que** les éléments détecteurs (D11', D12', D21', D22') sont disposés conjointement avec une source de lumière 'L') sur une platine de support (T').

**4.** Dispositif optique de mesure de position suivant la revendication 2, **caractérisé par le fait que** les graduations d'exploration des champs d'exploration (AF1', AF2') sont optimisées en ce qui concerne la modulation des ordres de diffraction +1 et -1 de manière qu'un déphasage de 120° existe entre les signaux partiels de ces ordres de diffraction.

**5.** Dispositif optique de mesure de position suivant la revendication 1, **caractérisé par le fait que** les éléments de déviation optiques (AE1', AE2') sont réalisés sous forme de prismes.

**6.** Dispositif optique de mesure de position suivant la revendication 1, **caractérisé par le fait que** les éléments de déviation optiques (AE1', AE2') sont réalisés sous forme de structures de grille de diffraction.

**7.** Dispositif optique de mesure de position suivant au moins l'une des revendications précédentes, **caractérisé par le fait que** le dispositif de mesure de position est réalisé sous forme de dispositif de mesure linéaire.

**8.** Dispositif optique de mesure de position suivant au moins l'une des revendications précédentes, **caractérisé par le fait que** le dispositif de mesure de position est réalisé sous forme de dispositif de mesure angulaire.

# FIG. 1a

Stand der Technik

# FIG. 1b

# FIG. 1c

### FIG. 2a

### FIG. 2b

### FIG. 2c